# EUROPEAN PATENT SPECIFICATION

(11) **EP 1 698 186 B1**
(45) Date of publication and mention of the grant of the patent: **22.10.2008**
(21) Application number: 04804650.2
(22) Date of filing: 02.12.2004
(51) Int. Cl.: H04Q 7/38

(54) **PROVISION OF A CONTINOUS WIRELESS CONNECTION USING A MOBILE STATION AS RELAY**
BEREITSTELLUNG EINER KONTINUIERLICHEN DRAHTLOSEN VERBINDUNG DURCH VERWENDUNG EINER MOBILSTATION ALS RELAIS
FOURNITURE D'UNE CONNEXION SANS FIL CONTINUE AU MOYEN D'UNE STATION MOBILE UTILISEE COMME RELAIS

(30) Priority: 19.12.2003 EP 03104823
(43) Date of publication of application: 06.09.2006
(73) Proprietor: TELEFONAKTIEBOLAGET LM ERICSSON (publ), 126 25 Stockholm (SE)
(72) Inventor: NYSTRÖM, Johan, S-112 33 Stockholm (SE); FRENGER, Pål, SE-58275 Linköping (SE); DAHLMAN, Erik, S-168 68 Broma (SE); PARKVALL, Stefan, S-113 22 Stockholm (SE)
(74) Representative: Stenborg, Anders Vilhelm
(86) International application number: PCT/EP2004/053225
(87) International publication number: WO 2005/060276

(56) References cited:
- WO-A-03/003672
- WO-A-03/050689
- US-A1- 2002 146 980
- 3GPP: "3rd Generation Partnership Project; Technical Specification Group Radio Access Network; Radio Resource Management Strategies (Release 5)" 3GPP TR 25.922 V5.0.0 (2002-03), [Online] March 2002 (2002-03), pages 12-23, XP002283453 Retrieved from the Internet: URL:www.3gpp.org> [retrieved on 2004-06-07]
- GEORGE NEONAKIS AGGELOU ET AL: "ON THE RELAYING CAPABILITY OF NEXT-GENERATION GSM MODULAR NETWORKS" IEEE PERSONAL COMMUNICATIONS, IEEE COMMUNICATIONS SOCIETY, US, vol. 8, no. 1, 1 February 2001 (2001-02-01), pages 40-47, XP001006640 ISSN: 1070-9916

## Description

### TECHNICAL FIELD

The present invention relates to a method for setting up and maintaining wireless communication between nodes.

### BACKGROUND

### Technical Background/Existing Technology

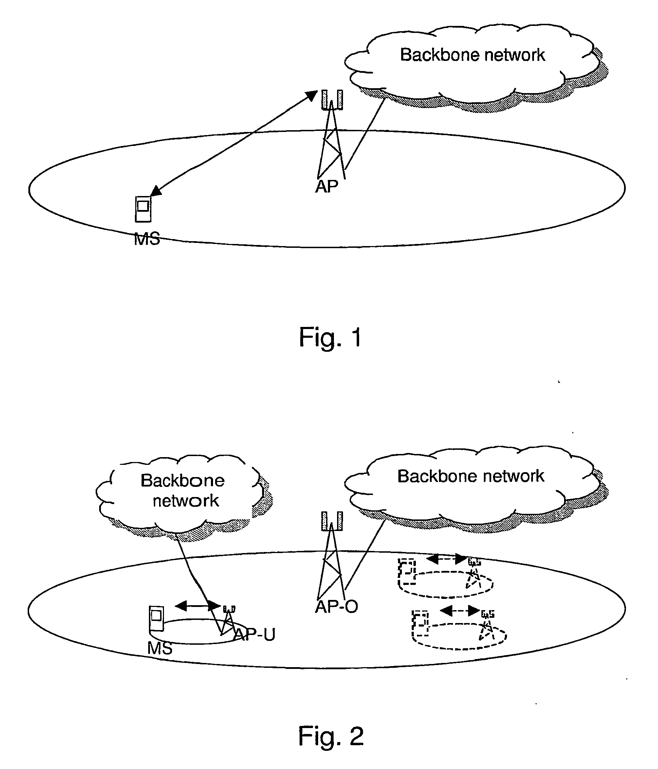

Figure 1 illustrates a basic communication scenario in a cellular system, with a Mobile Station (MS), sometimes referred to a Mobile Terminal or a User Equipment, communicating with a network node, here referred to as an Access Point (AP), but also sometimes referred to as a Network Access Point, or a Base Station, or a Node B, by means of a direct two-way radio link. The traffic sent by the mobile station and received by the access point is typically routed into a backbone network. Similarly the access point typically receives traffic from the backbone network for transmission to the mobile station:

Some key characteristics of future radio access are:
Support for very large traffic, measured in Mbps (Megabits per second) per area. A key issue is how to enable this with a limited amount of spectrum. This is true for transmission in the downlink or forward link direction as well as the uplink or reverse link (MS-to-AP) direction.
Support for very high data rates. A key issue is how to enable this without the need for very high transmission power. This is primarily an issue for communication in the uplink (MS-to-AP) direction, due to limitations in the mobile station transmission power. However, in some cases it could also be an issue for communication in the downlink direction.

An obvious means to handle both key issues mentioned above is to reduce the cell size, i.e. reduce the coverage area of each access point. When doing so one is often deploying "two cell layers" with cells of different size, also known as a Hierarchical Cell Structure (HCS), see Figure 2. The two cell layers can be referred to as the *over-laid layer* and the *under-laid layer* with corresponding access points AP-O and AP-U, respectively. Note that the over-laid layer and the under-laid layer may be connected to the same or different backbone networks. Also note that, as explicitly shown in Figure 2, the area covered by an access point of the over-laid layer will typically cover the coverage area of multiple access points of the under-laid layer.

The radio-access technologies used in the under-laid layer and the over-laid layer could, but does not need to, be the same. The over-laid layer could e.g. use cellular radio-access technology, such as third generation 3G Wideband Code Division Multiple Access, WCDMA, or a future fourth generation 4G cellular technology based on e.g. Orthogonal Frequency Division Multiplexing (OFDM) or Orthogonal Frequency and Code Division Multiplexing (OFCDM). The under-laid layer could e.g. use WLAN technology, such as IEEE 802.11. However, the under-laid layer could also use the same radio-access technology as the over-laid layer. Both the overlaid and the under-laid layer could e.g. be based on 3G WCDMA or a future 4G radio-access technology. Many other combinations of radio-access technologies for the over-laid and under-laid layers are also possible.

The over-laid and under-laid layers could operate in the same or neighboring frequency bands or in completely different frequency bands. The frequency band, or spectrum, used for the under-laid and/or over-laid layer could be licensed or unlicensed. In case of licensed spectrum, the same operator will typically operate both the under-laid and over-laid layers. However, the under-laid and over-laid layers could also be operated by different operators. From a mobile-station complexity point-of-view, it is beneficial if the over-laid and under-laid layers use the same air-interface and operate in the same or neighbor frequency bands.

A related means to deal with the two basic issues mentioned above (support for high capacity and very high data rates) is to utilize so-called relaying.

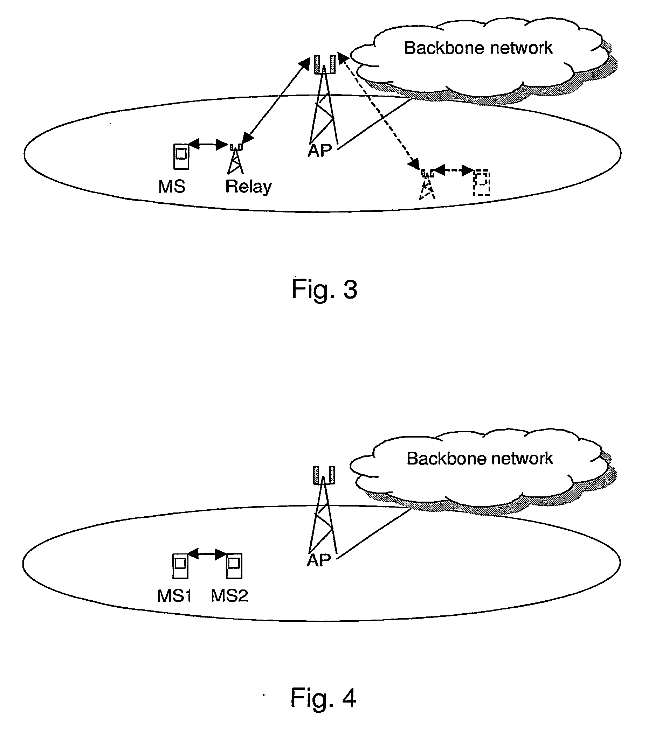

This implies that mobile stations communicate with the access point via one (or multiple) intermediate node(s), also referred to as being Relays, see Figure 3. In the uplink, a relay forwards data received from the mobile station to the access point. Similarly, in the downlink a relay forwards data received from the access point to the mobile station. In the scenario outlined in Figure 3, the mobile station can either communicate with the access point directly or, as explicitly shown on Figure 3, indirectly via a relay. To relate with the solution of Figure 2 above, one can say that in the solution of Figure 3 there are two communication layers, an over-laid layer where a mobile station communicates directly with the access point and a Relay layer (corresponding to the under-laid layer of figure 2) where a mobile station communicates with the access point via a relay. Similar to the solution of Figure 2, the air-interface technology used when a mobile station communicates directly with an access point and the air-interface technology used when a mobile station communicates with a relay could be the same or different. Similarly, the spectrum used when a mobile station communicates directly with the access point could be the same or different compared to the spectrum used when a mobile station communicates with a relay. Note that, as explicitly shown in Figure 3, the area covered by an access point of the over-laid layer will typically include multiple relays.

A third transmission scenario, with some similarities to that of Figure 2, may occur if two mobile stations very close to each other are to communicate with each other. Instead of communicating via the mobile network, i.e. via an access point, a radio link may then be set up directly between the two mobile stations, see Figure 4. This can be referred to as direct MS-to-MS communication. Note that in the general case more than two mobile stations may be involved in this kind of direct MS-to-MS-communication scenario. Once again, to relate with the solution of Figure 2 above, one can say that also in the solution of Figure 4 there are two communication layers, an overlaid layer where the mobile-stations communicate via an access point and an MS-to-MS layer where the mobile stations communicate directly with each other. Similar to the solution of Figure 2, the air-interface technology used when a mobile station communicates with an access point and the air-interface technology used when the mobile station directly communicates with another mobile station could be the same or different.

### Problems with the existing solutions

There are several handover-related problems with the solution described in Figure 2.
It may be difficult or at least costly to deploy the under-laid layer such that it can provide continuous coverage over the entire area to be covered by the cellular system. Actually, this is one of the reasons to deploy two layers, i.e. it is then sufficient if only the over-laid layer provides full coverage over the entire area to be covered by the cellular system. If the under-laid layer does not provide continuous coverage, a handover to an access point of the over-laid layer is needed when the mobile station leaves the coverage of the under-laid layer. Each such handover implies a risk for a loss of connection. Even if the connection is not completely lost, the handover may lead to a short or longer break in the communication between the mobile station and the network, which may have a negative effect on the service quality.
For a high-speed-moving mobile station connected to the under-laid layer there will be frequent handovers within the under-laid layer. This implies an increased risk for loss of connection, even if the under-laid layer provides full coverage. A typical solution to this problem is to keep all mobile stations moving at high speed within the over-laid layer all the time. However, this implies that high data rates, which are only supported within the under-laid layer, cannot be provided for a last-moving mobile station.
Finally, in some cases, the technology used for the under-laid layer may not even support handover.

Another, non-handover-related, problem with the solution of Figure 2 is that the under-laid layer must provide for communication in both directions (to and from a mobile station), despite the fact that, in some cases, the capacity and data rate requirements are such that communication using the over-laid layer would be sufficient in one of the communication directions. One example is when the only reason to use the under-laid layer is to support very high data rates in the uplink (from-the-MS) direction with limited mobile-station transmission power. Having to support two-way communication in the under-laid layer may then lead to unnecessarily expensive equipment in the under-laid layer. In some cases, it may not even be possible to transmit in both directions using the under-laid layer, e.g. due to spectrum restrictions.

The solution of Figure 3 suffers from several similar problems as the solution of Figure 2 such as:
- It may be difficult or at least costly to deploy relays for continuous coverage over the entire area to be covered by the cellular system. When a mobile station moves out of relay coverage, a handover to the access point, i.e. the over-laid layer, is needed. Each such handover implies a risk for a loss of the connection.
- The relay must provide for communication in two directions (to and from the mobile terminal). This may lead to unnecessarily expensive relays.

The solution of Figure 4 also suffers from similar handover problems as the solutions of Figures 2 and 3. More specifically, as the mobile stations communicating directly with each other move away from each other, the connection between them must be "handed over" to the access point, i.e. to the over-laid layer, with a risk of loss-of-connection as a consequence.

Therefore there is a desire of an improved solution, compared to the solutions described in Figures 2, 3, and 4, in order to avoid the different problems discussed above.

In WO 03/ 103232 A1, a terminal, base station and method for a cellular network are presented, which divides data intended for a user terminal into a number of data packets. A selecting means selects at least another user terminal of the cellular network that is able to connect to the first user terminal via a second network. Different data packets can thereby be sent to the user terminal simultaneously via different paths.

### SUMMARY OF THE INVENTION

A wireless linking in a cellular communication system and a method for wireless linking is disclosed such that a mobile station is maintained in simultaneous communication with at least a first node and a second node for access to the cellular communication system. Information then going to and from the first node is not identical to the information going to and from the second node. A first wireless link to the first node is for control information only. In one embodiment, the first node is an access point in an over-laid layer and the second node is an access point in an under-laid layer of a hierarchical cell structure. In a second embodiment the first node is an access point and the second node is a relay node forwarding received information to and/or from the first node. In a third embodiment the first node is an access point and the second node is another mobile station. In still another embodiment a second wireless link to the second node is only for communication of information from the mobile station or only for communication of information to the mobile station.

A system for wireless linking in cellular communication according to the present invention is set forth by the independent claim 1 and further embodiments are defined by the dependent claims 2 to 9. Furthermore a method for wireless linking to a cellular communication system according to the present invention is set forth by the independent claim 10, and further embodiments are defined by the dependent claims 11 to 18. Moreover, a mobile station according to the present invention is set forth by the independent claim 19, and further embodiments are defined by the dependent claims 20 to 25. Finally, an access point in a cellular communication system according to the present invention is set forth by the independent claim 26.

### SHORT DESCRIPTION OF THE DRAWINGS

The invention, together with further objects and advantages thereof, may best be understood by referring to the following detailed description taken together with the accompanying drawings, in which:
- FIG. 1: illustrates a basic communication scenario in a cellular system;
- FIG. 2: illustrates a cellular system having two cell layers, an overlaid layer and an under-laid layer;
- FIG. 3: illustrates a cellular system with relays forwarding information from a Mobile Station to an Access Point and/or information from an Access Point to a Mobile Station;
- FIG. 4: illustrates a cellular system having a connection set up directly between two Mobile Stations;
- FIG. 5: illustrates a solution according to a present application with a mobile station simultaneously communicating with both an Access Point of an over-laid layer and an Access Point of an under-laid layer;
- FIG. 6: illustrates a solution according to the present application with a Mobile Station simultaneously communicating both directly with an Access Point and indirectly with the Access Point via a Relay;
- FIG. 7: illustrates a solution according to the present application with a Mobile Station simultaneously communicating with an Access Point and directly with another Mobile Station.
- Fig. 8: illustrates a solution according the present application where communication in an over-laid layer and communication in an under-laid/relay/MS-to-MS layer share the radio resources by means of sharing in the frequency domain
- Fig. 9: illustrates a solution according the present application where communication in an over-laid layer and communication in an under-laid/relay/MS-to-MS layer share the radio resources by means of sharing in the time domain

### DETAILED DESCRIPTION OF THE INVENTION

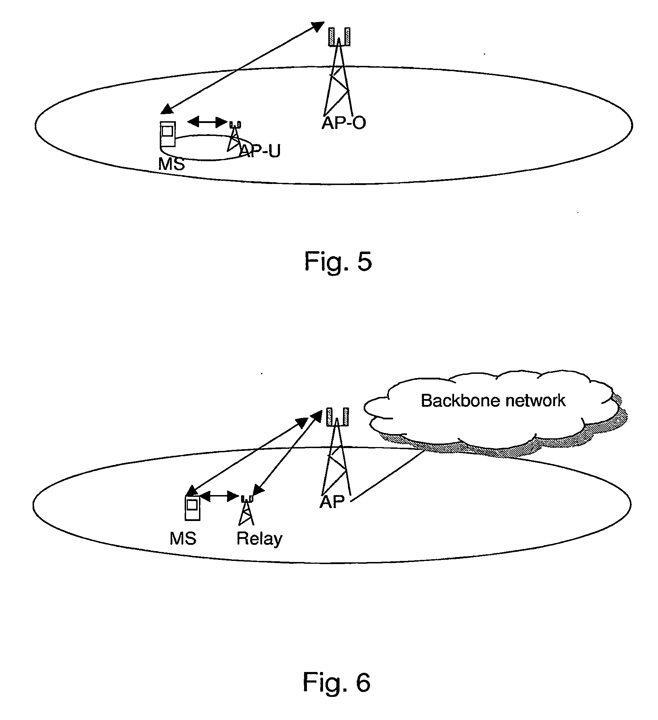

A solution to the problems related to Figure 2 above apparent in the discussion of the background, is to let a mobile station communicate simultaneously with both at least one Node (an access point) of the over-laid system and at least one Node (an access point) of the under-laid system, see Figure 5.

Communication via the access point of the over-laid layer is limited to low data rates, e.g. control signaling, while high-rate user traffic is communicated via the access point of the under-laid layer. In the general case, any kind of traffic can use the overlaid layer. The benefit of this approach, compared to the approach of Figures 2, where the mobile station communicates via either an access point of the over-laid layer or an access point of the under-laid layer but not simultaneously with access points of both layers, is that, even if the connection in the under-laid layer is lost, the connection between the network and the mobile station is not completely lost. Data communication can continue via the over-laid layer, albeit typically at a lower data rate. Furthermore, control signaling using the radio link in the over-laid layer can rapidly restore the connection in the under-laid layer, without the need for time-consuming access procedures, etc.

In another case, communication via the access point of the under-laid layer may only be in one direction, e.g. only in the uplink direction (communication from the mobile station to the access point of the under-laid layer) or only the downlink direction (communication from the access point of the under-laid layer to the mobile station). In this case, all communication, including best-effort packet data communication, in the other direction takes place via the access point of the over-laid layer. Thus the solution presented in Figure 5 avoids the requirement for the access points of the under-laid layer to always support two-way communication (to and from the mobile station).

Similarly, a solution for the problems related to the solution of Figure 3 above, is to let a mobile station communicate simultaneously with both an access point, i.e. a Node in the over-laid layer, and at least relay, i.e. a Node in the relaying layer, see Figures 6. Once again, the communication in the over-laid layer, i.e. directly via the access point, is limited to low data rates, e.g. control signaling, while high-rate user traffic is communicated using the relay layer, i.e. via the relay. Furthermore, the relay layer may only allow for communication in one direction, e.g. only the uplink direction (communication of information from the mobile station to the relay) or only the downlink direction (communication of information from the relay to the mobile station).

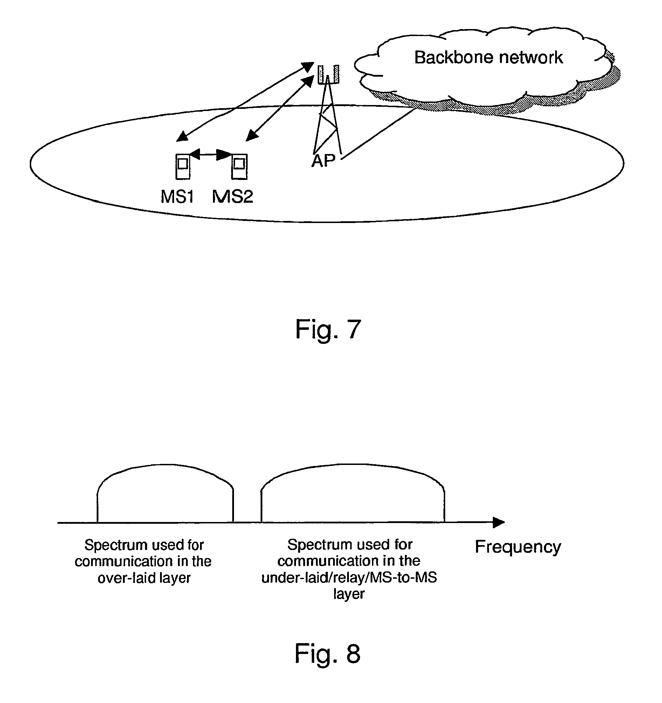

Similarly, a solution for the problems related to the solution of Figure 4 above, is to let a mobile station communicate simultaneously with an access point, i.e. a Node in the over-laid layer and with another mobile station, see Figures 7. Once again, the communication in the over-laid layer, i.e. via the access point, is limited to low data rates, e.g. control signaling, while high-rate user traffic is communicated using directly between the mobile stations.

Note that, when setting up a communication scenario such as the one of Figures 5, 6, and 7, a connection is first set up in the over-laid layer. When this is done and the capacity or data rate requirements so require or for other reasons, a second communication link is set up in the under-laid/relay/MS-to-MS layer, by means of signaling using the over-laid layer.

Although the solutions shown in Figures 5, 6, and 7 illustrate a mobile station with communication links with a single Node in the under-laid/relay/MS-to-MS layer and a single Node in the over-laid layer, in a general case the mobile station may communicate with more than one Node in each layer.

Also note that, similar to the known solutions of Figure 2, 3, and 4, also with the proposed solutions of Figure 5, 6, and 7 the air interface technology of the over-laid layer and the air-interfaced technology of the under-laid/relay/MS-to-MS layer may be the same or different. Similarly, the same, neighbor, or completely different spectrum may be used for the over-laid layer and the under-laid/relay/MS-to-MS layer.

In order for the mobile station to be able to simultaneously receive and/or transmit data from/to a Node in the over-laid layer and from/to a Node in the under-laid/relay/MS-to-MS layer, according to Figure 5, 6, and 7, the radio resources must be shared between the two layers. One solution how to share the radio resources between the two layers is to transmit in different frequency bands in the over-laid layer and the under-laid/relay/MS-to-MS layer, i.e. sharing in the frequency domain, see Figure 8. Note that, as also explicitly shown in Figure 8, the amount of spectrum used for communication in the two layers may not be the same.

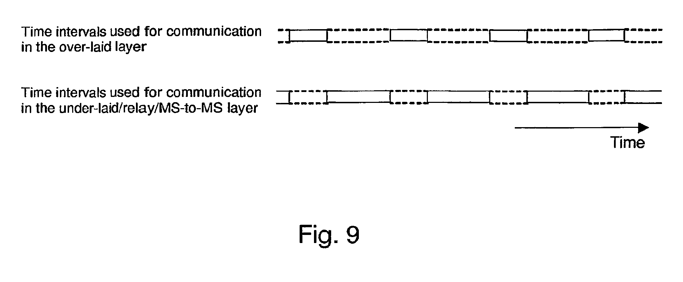

A second solution how to share the radio resources between the two layers is to transmit in different non-overlapping time intervals in the over-laid layer and the under-laid/relay/MS-to-MS layer, i.e. sharing in the time domain, see Figure 9. Note that, as also explicitly shown in figure 9, the amount of time used for communication in the two layers may not be the same.

## Claims

1. A system for wireless linking in cellular communication, comprising:
a first node (AP, AP-O) for access to a cellular communication system;
a second node (AP-U, MS2, Relay) for access to said cellular communication system;
a mobile station (MS, MS1), arranged to be maintained in simultaneous communication with at least said first node (AP, AP-O) and said second node (AP-U, MS2, Relay);
whereby information going to and from the first node (AP, AP-O) and to and from the second node (AP-U, MS2, Relay) is not identical,
**characterized in that**
a first wireless link between said mobile station (MS, MS1) and said first node (AP, AP-O) is arranged for control information only.

2. The system according to claim 1, **characterized in that** said second node is a relay node (Relay) forwarding received information to and from said first node (AP, AP-O).

3. The system according to claim 1, **characterized in that** the second node is another mobile station (MS2) performing a mobile station to mobile station communication.

4. The system according to any of the claims 1 to 3, **characterized in that** said communication between said mobile station (MS, MS1) and said second node (AP-U, MS2, Relay) is arranged only for communication of information from the mobile station (MS, MS1) .

5. The system according to any of the claims 1 to 3, **characterized in that** said communication between said mobile station (MS, MS1) and said second node (AP-U, MS2, Relay) is arranged only for communication of information to the mobile station (MS, MS1).

6. The system according to any of the claims 1 to 5, **characterized in that**
said first node (AP, AP-O) is arranged for transmission using a first air-interface technology; and
said second node (AP-U, MS2, Relay) is arranged for transmission using a second air-interface technology, different from said first air-interface technology.

7. The system according to any of the claims 1 to 5, **characterized in that**
said first node (AP, AP-O) is arranged for transmission using a first air-interface technology; and
said second node (AP-U, MS2, Relay) is arranged for transmission using said first air-interface technology.

8. The system according to any of the claims 1 to 7, **characterized in that** said communication over said first node (AP, AP-O) and said second node (AP-U, MS2, Relay) is time multiplexed.

9. The system according to any of the claims 1 to 7, **characterized in that** said communication over said first node (AP, AP-O) and said second node (AP-U, MS2, Relay) is frequency multiplexed.

10. A method for wireless linking to a cellular communication system, comprising the steps of:
communicating between a mobile station (MS, MS1) and a first node (AP, AP-O) for accessing said cellular communication system;
communicating between said mobile station (MS, MS1) and a second node (AP-U, MS2, Relay) for accessing said cellular communication system;
said step of communicating between a mobile station (MS, MS1) and a first node (AP, AP-O) being maintained simultaneous as said step of communicating between said mobile station (MS, MS1) and a second node (AP-U, MS2, Relay);
whereby information going to and from the first node (AP, AP-O) and to and from the second node (AP-U, MS2, Relay) is not identical,
**characterized in that**
said step of communicating between a mobile station (MS, MS1) and a first node (AP, AP-O) over a first wireless link is for control information only.

11. The method according to claim 10, **characterized in that** said second node is a relay node (Relay), whereby said method comprises the further steps of forwarding information from said mobile station (MS, MS1) received by said second node (Relay) to said first node (AP, AP-O) and forwarding information from said first node (AP, AP-O) received by said second node (Relay) to said mobile station (MS, MS1).

12. The method according to claim 10, **characterized in that** said second node is another mobile station (MS2), whereby said step of communicating between said mobile station (MS, MS1) and a second node (MS2) comprises the step of performing a Mobile Station to Mobile Station communication.

13. The method according to any of the claims 10 to 12, **characterized in that** said step of communicating between said mobile station (MS, MS1) and a second node (AP-U, MS2, Relay) only comprises communication of information from the mobile station (MS, MS1).

14. The method according to any of the claims 10 to 12, **characterized in that** said step of communicating between said mobile station (MS, MS1) and a second node (AP-U, MS2, Relay) only comprises communication of information to the mobile station (MS, MS1).

15. The method according to any of the claims 10 to 14, **characterized in that** said step of communicating between a mobile station (MS, MS1) and a first node (AP, AP-O) and said step of communicating between said mobile station (MS, MS1) and a second node (AP-U, MS2, Relay) use different air-interface technologies for transmission.

16. The method according to any of the claims 10 to 14, **characterized in that** said step of communicating between a mobile station (MS, MS1) and a first node (AP, AP-O) and said step of communicating between said mobile station (MS, MS1) and a second node (AP-U, MS2, Relay) use a same air-interface technology for transmission.

17. The method according to any of the claims 10 to 16, **characterized by** the further step of:
time multiplexing the communication with the first node (AP, AP-O) and the second node (AP-U, MS2, Relay).

18. The method according to any of the claims 10 to 16, **characterized by** the further step of:
frequency multiplexing the communication with the first node (AP, AP-O) and the second node (AP-U, MS2, Relay).

19. A mobile station (MS, MS1), comprising:
means for communicating with a first node (AP, AP-O) for access to a cellular communication system;
means for communicating with a second node (AP-U, MS2, Relay) for access to said cellular communication system;
said mobile station (MS, MS1) being arranged to maintain simultaneous communication by said means for communicating with a first node (AP, AP-O) and said means for communicating with a second node (AP-U, MS2, Relay);
whereby information going to and from the first node (AP, AP-O) and to and from the second node (AP-U, MS2, Relay) is not identical,
**characterized in that**
a first wireless link between said mobile station (MS, MS1) and said first node (AP, AP-O) is arranged for control information only.

20. The mobile station according to claim 19, **characterized in that** said means for communicating between with said second node (AP-U, MS2, Relay) is arranged only for communication of information from said mobile station (MS, MS1).

21. The mobile station according to claim 19, **characterized in that** said means for communicating between with said second node (AP-U, MS2, Relay) is arranged only for communication of information to said mobile station (MS, MS1).

22. The mobile station according to any of the claims 19 to 21, **characterized in that** said means for communicating with a first node (AP, AP-O) and said means for communicating with a second node (AP-U, MS2, Relay) are arranged for using different air-interface technologies for transmission.

23. The mobile station according to any of the claims 19 to 21, **characterized in that** said means for communicating with a first node (AP, AP-O) and said means for communicating with a second node (AP-U, MS2, Relay) are arranged for using a same air-interface technology for transmission.

24. The mobile station according to any of the claims 19 to 23, **characterized by** a time multiplexor arranged to operate on said means for communicating with a first node (AP, AP-O) and said means for communicating with a second node (AP-U, MS2, Relay.

25. The mobile station according to any of the claims 19 to 23, **characterized by** a frequency multiplexor arranged to operate on said means for communicating with a first node (AP, AP-O) and said means for communicating with a second node (AP-U, MS2, Relay.

26. An access point (AP, AP-O) of a cellular communications system, comprising:
means for communicating with a mobile station (MS, MS 1) that is arranged to maintain a simultaneous communication with a second node (AP-U, MS2, Relay) for accessing said cellular communication system;
whereby information going to and from said access point (AP, AP-O) and to and from the second node (AP-U, MS2, Relay) is not identical,
**characterized in that**
a first wireless link between said mobile station (MS, MS1) and said access point (AP, AP-O) is arranged for control information only.

## Patentansprüche

1. System für ein drahtloses Verbinden bei zellulärer Kommunikation, umfassend:
einen ersten Knoten (AP, AP-O) für einen Zugang zu einem zellulären Kommunikationssystem;
einen zweiten Knoten (AP-U, MS2, Relais) für einen Zugang zu dem zellulären Kommunikationssystem;
eine Mobilstation (MS, MS1), die ausgelegt ist, in einer simultanen Kommunikation mit zumindest dem ersten Knoten (AP, AP-O) und dem zweiten Knoten (AP-U, MS2, Relais) unterhalten zu werden;
wobei zu und von dem ersten Knoten (AP, AP-O) und zu und von dem zweiten Knoten (AP-U, MS2, Relais) gehende Information nicht identisch ist,
**dadurch gekennzeichnet, dass**
eine erste drahtlose Verbindung zwischen der Mobilstation (MS, MS1) und dem ersten Knoten (AP, AP-O) nur für eine Steuerinformation ausgelegt ist.

2. System nach Anspruch 1, **dadurch gekennzeichnet, dass** der zweite Knoten ein Relais-Knoten (Relais) zum Weiterleiten empfangener Information an und von dem ersten Knoten (AP, AP-O) ist.

3. System nach Anspruch 1, **dadurch gekennzeichnet, dass** der zweite Knoten eine andere Mobilstation (MS2) zum Durchführen einer Kommunikation von Mobilstation zu Mobilstation ist.

4. System nach irgendeinem der Ansprüche 1 bis 3, **dadurch gekennzeichnet, dass** die Kommunikation zwischen der Mobilstation (MS, MS1) und dem zweiten Knoten (AP-U, MS2, Relais) nur für die Kommunikation von Information von der Mobilstation (MS, MS1) ausgelegt ist.

5. System nach irgendeinem der Ansprüche 1 bis 3, **dadurch gekennzeichnet, dass** die Kommunikation zwischen der Mobilstation (MS, MS1) und dem zweiten Knoten (AP-U, MS2, Relais) nur für die Kommunikation von Information an die Mobilstation (MS, MS1) ausgelegt ist.

6. System nach irgendeinem der Ansprüche 1 bis 5,
**dadurch gekennzeichnet, dass**
der erste Knoten (AP, AP-O) zum Übertragen ausgelegt ist, unter Verwendung einer ersten Luftschnittstellen-Technologie; und
der zweite Knoten (AP-U, MS2, Relais) zum Übertragen ausgelegt ist, unter Verwendung einer zweiten Luftschnittstellen-Technologie, die sich von der ersten Luftschnittstellen-Technologie unterscheidet.

7. System nach irgendeinem der Ansprüche 1 bis 5,
**dadurch gekennzeichnet, dass**
der erste Knoten (AP, AP-O) zum Übertragen ausgelegt ist, unter Verwendung einer ersten Luftschnittstellen-Technologie; und
der zweite Knoten (AP-U, MS2, Relais) zum Übertragen ausgelegt ist, unter Verwendung der ersten Luftschnittstellen-Technologie.

8. System nach irgendeinem der Ansprüche 1 bis 7, **dadurch gekennzeichnet, dass** die Kommunikation über den ersten Knoten (AP, AP-O) und den zweiten Knoten (AP-U, MS2, Relais) Zeit-gemultiplext ist.

9. System nach irgendeinem der Ansprüche 1 bis 7, **dadurch gekennzeichnet, dass** die Kommunikation über den ersten Knoten (AP, AP-O) und den zweiten Knoten (AP-U, MS2, Relais) Frequenz-gemultiplext ist.

10. Verfahren zum drahtlosen Verbinden mit einem zellulären Kommunikationssystem, die Schritte umfassend:
Kommunizieren zwischen einer Mobilstation (MS, MS1) und einem ersten Knoten (AP, AP-O) für ein Zugreifen auf das zelluläre Kommunikationssystem;
Kommunizieren zwischen der Mobilstation (MS, MS1) und einem zweiten Knoten (AP-U, MS2, Relais) für ein Zugreifen auf das zelluläre Kommunikationssystem;
wobei der Schritt zum Kommunizieren zwischen einer Mobilstation (MS, MS1) und einem ersten Knoten (AP, AP-O) gleichzeitig unterhalten wird wie der Schritt zum Kommunizieren zwischen der Mobilstation (MS, MS1) und einem zweiten Knoten (AP-U, MS2, Relais);
wobei zu und von dem ersten Knoten (AP, AP-O) und zu und vom dem zweiten Knoten (AP-U, MS2, Relais) gehende Information nicht identisch ist,
**dadurch gekennzeichnet, dass**
der Schritt zum Kommunizieren zwischen einer Mobilstation (MS, MS1) und einem ersten Knoten (AP, AP-O) über eine erste drahtlose Verbindung nur für eine Steuerinformation ist.

11. Verfahren nach Anspruch 10, **dadurch gekennzeichnet, dass** der zweite Knoten ein Relais-Knoten (Relais) ist, wobei das Verfahren die weiteren Schritte umfasst zum Weiterleiten von Information von der Mobilstation (MS, MS1), empfangen von dem zweiten Knoten (Relais), an den ersten Knoten (AP, AP-O) und zum Weiterleiten von Information von dem ersten Knoten (AP, AP-O), empfangen von dem zweiten Knoten (Relais), an die Mobilstation (MS, MS1).

12. Verfahren nach Anspruch 10, **dadurch gekennzeichnet, dass** der zweite Knoten eine andere Mobilstation (MS2) ist, wobei der Schritt zum Kommunizieren zwischen der Mobilstation (MS, MS1) und einem zweiten Knoten (MS2) den Schritt zum Durchführen einer Kommunikation von Mobilstation zu Mobilstation umfasst.

13. Verfahren nach irgendeinem der Ansprüche 10 bis 12, **dadurch gekennzeichnet, dass** der Schritt zum Kommunizieren zwischen der Mobilstation (MS, MS1) und einem zweiten Knoten (AP-U, MS2, Relais) nur eine Kommunikation der Information von der Mobilstation (MS, MS1) umfasst.

14. Verfahren nach irgendeinem der Ansprüche 10 bis 12, **dadurch gekennzeichnet, dass** der Schritt zum Kommunizieren zwischen der Mobilstation (MS, MS1) und einem zweiten Knoten (AP-U, MS2, Relais) nur eine Kommunikation der Information an die Mobilstation (MS, MS1) umfasst.

15. Verfahren nach irgendeinem der Ansprüche 10 bis 14, **dadurch gekennzeichnet, dass** der Schritt zum Kommunizieren zwischen einer Mobilstation (MS, MS1) und einem ersten Knoten (AP, AP-O) und der Schritt zum Kommunizieren zwischen der Mobilstation (MS, MS1) und einem zweiten Knoten (AP-U, MS2, Relais) unterschiedliche Luftschnittstellen-Technologien zum Übertragen verwendet.

16. Verfahren nach irgendeinem der Ansprüche 10 bis 14, **dadurch gekennzeichnet, dass** der Schritt zum Kommunizieren zwischen einer Mobilstation (MS, MS1) und einem ersten Knoten (AP, AP-O) und der Schritt zum Kommunizieren zwischen der Mobilstation (MS, MS1) und einem zweiten Knoten (AP-U, MS2, Relais) eine gleiche Luftschnittstellen-Technologie zum Übertragen verwendet.

17. Verfahren nach irgendeinem der Ansprüche 10 bis 16, **gekennzeichnet durch** den weiteren Schritt zum:
Zeit-Multiplexen der Kommunikation mit dem ersten Knoten (AP, AP-O) und dem zweiten Knoten (AP-U, MS2, Relais).

18. Verfahren nach irgendeinem der Ansprüche 10 bis 16, **gekennzeichnet durch** den weiteren Schritt zum:
Frequenz-Multiplexen der Kommunikation mit dem ersten Knoten (AP, AP-O) und dem zweiten Knoten (AP-U, MS2, Relais).

19. Mobilstation (MS, MS1), umfassend:
eine Einrichtung zum Kommunizieren mit einem ersten Knoten (AP, AP-O) für einen Zugriff auf ein zelluläres Kommunikationssystem;
eine Einrichtung zum Kommunizieren mit einem zweiten Knoten (AP-U, MS2, Relais) für einen Zugriff auf das zelluläre Kommunikationssystem;
wobei die Mobilstation (MS, MS1) zum Unterhalten einer simultanen Kommunikation durch die Einrichtung zum Kommunizieren mit einem ersten Knoten (AP, AP-O) und die Einrichtung zum Kommunizieren mit einem zweiten Knoten (AP-U, MS2, Relais) ausgelegt ist;
wobei zu und von dem ersten Knoten (AP, AP-O) und zu und von dem zweiten Knoten (AP-U, MS2, Relais) gehende Information nicht identisch ist,
**dadurch gekennzeichnet, dass**
eine erste drahtlose Verbindung zwischen der Mobilstation (MS, MS1) und dem ersten Knoten (AP, AP-O) nur für eine Steuerinformation ausgelegt ist.

20. Mobilstation nach Anspruch 19, **dadurch gekennzeichnet, dass** die Einrichtung zum Kommunizieren mit dem zweiten Knoten (AP-U, MS2, Relais) nur für eine Kommunikation von Information von der Mobilstation (MS, MS1) ausgelegt ist.

21. Mobilstation nach Anspruch 19, **dadurch gekennzeichnet, dass** die Einrichtung zum Kommunizieren mit dem zweiten Knoten (AP-U, MS2, Relais) nur für eine Kommunikation von Information an die Mobilstation (MS, MS1) ausgelegt ist.

22. Mobilstation nach einem der Ansprüche 19 bis 21, **dadurch gekennzeichnet, dass** die Einrichtung zum Kommunizieren mit einem ersten Knoten (AP, AP-O) und die Einrichtung zum Kommunizieren mit einem zweiten Knoten (AP-U, MS2, Relais) zur Verwendung unterschiedlicher Luftschnittstellen-Technologien für eine Übertragung ausgelegt sind.

23. Mobilstation nach einem der Ansprüche 19 bis 21, **dadurch gekennzeichnet, dass** die Einrichtung zum Kommunizieren mit einem ersten Knoten (AP, AP-O) und die Einrichtung zum Kommunizieren mit einem zweiten Knoten (AP-U, MS2, Relais) zur Verwendung einer gleichen Luftschnittstellen-Technologie für eine Übertragung ausgelegt sind.

24. Mobilstation nach einem der Ansprüche 19 bis 23, **gekennzeichnet durch** einen Zeit-Multiplexer, der ausgelegt ist auf der Einrichtung zum Kommunizieren mit einem ersten Knoten (AP, AP-O) und der Einrichtung zum Kommunizieren mit einem zweiten Knoten (AP-U, MS2, Relais) zu arbeiten.

25. Mobilstation nach einem der Ansprüche 19 bis 23, **gekennzeichnet durch** einen Frequenz-Multiplexer, der ausgelegt ist auf der Einrichtung zum Kommunizieren mit einem ersten Knoten (AP, AP-O) und der Einrichtung zum Kommunizieren mit einem zweiten Knoten (AP-U, MS2, Relais) zu arbeiten.

26. Zugangspunkt (AP, AP-O) eines zellulären Kommunikationssystems, umfassend:
eine Einrichtung zum Kommunizieren mit einer Mobilstation (MS, MS1), die ausgelegt ist zum Unterhalten einer simultanen Kommunikation mit einem zweiten Knoten (AP-U, MS2, Relais) für einen Zugriff auf das zelluläre Kommunikationssystem;
wobei zu und von dem Zugangspunkt (AP, AP-O) und zu und von dem zweiten Knoten (AP-U, MS2, Relais) gehende Information nicht identisch ist,
**dadurch gekennzeichnet, dass**
eine erste drahtlose Verbindung zwischen der Mobilstation (MS, MS1) und dem Zugangspunkt (AP, AP-O) nur für eine Steuerinformation ausgelegt ist.

## Revendications

1. Système de liaison sans fil dans les communications cellulaires, comprenant :
un premier noeud (AP, AP-O) pour accéder à un système de communication cellulaire ;
un deuxième noeud (AP-U, MS2, Relais) pour accéder audit système de communication cellulaire ;
une station mobile (MS, MS1), conçue pour être maintenue en communication simultanée avec au moins ledit premier noeud (AP, AP-O) et ledit deuxième noeud (AP-U, MS2, Relais) ;
de sorte que les informations allant vers le, et venant du, premier noeud (AP, AP-O), et allant vers le, et venant du, deuxième noeud (AP-U, MS2, Relais), ne sont pas identiques,
**caractérisé en ce que**
une première liaison sans fil entre ladite station mobile (MS, MS1) et ledit premier noeud (AP, AP-0) est conçue uniquement pour des informations de commande.

2. Système selon la revendication 1, **caractérisé en ce que** ledit deuxième noeud est un noeud relais (Relais) retransmettant les informations reçues vers et en provenance dudit premier noeud (AP, AP-O).

3. Système selon la revendication 1, **caractérisé en ce que** le deuxième noeud est une autre station mobile (MS2) effectuant une communication de station mobile à station mobile.

4. Système selon l'une quelconque des revendications 1 à 3, **caractérisé en ce que** ladite communication entre ladite station mobile (MS, MS1) et ledit deuxième noeud (AP-U, MS2, Relais) est uniquement conçue pour la communication d'informations depuis la station mobile (MS, MS1).

5. Système selon l'une quelconque des revendications 1 à 3, **caractérisé en ce que** ladite communication entre ladite station mobile (MS, MS1) et ledit deuxième noeud (AP-U, MS2, Relais) est uniquement conçue pour la communication d'informations vers la station mobile (MS, MS1).

6. Système selon l'une quelconque des revendications 1 à 5, **caractérisé en ce que**
ledit premier noeud (AP, AP-0) est conçu pour effectuer l'émission en utilisant une première technologie d'interface radio ; et
ledit deuxième noeud (AP-U, MS2, Relais) est conçu pour effectuer l'émission en utilisant une deuxième technologie d'interface radio, différente de ladite première technologie d'interface radio.

7. Système selon l'une quelconque des revendications 1 à 5, **caractérisé en ce que**
ledit premier noeud (AP, AP-O) est conçu pour effectuer l'émission en utilisant une première technologie d'interface radio ; et
ledit deuxième noeud (AP-U, MS2, Relais) est conçu pour effectuer l'émission en utilisant ladite première technologie d'interface radio.

8. Système selon l'une quelconque des revendications 1 à 7, **caractérisé en ce que** ladite communication par l'intermédiaire dudit premier noeud (AP, AP-O) et dudit deuxième noeud (AP-U, MS2, Relais) est multiplexée dans le temps.

9. Système selon l'une quelconque des revendications 1 à 7, **caractérisé en ce que** ladite communication par l'intermédiaire dudit premier noeud (AP, AP-O) et dudit deuxième noeud (AP-U, MS2, Relais) est multiplexée en fréquence.

10. Procédé pour établir une liaison sans fil à un système de communication cellulaire, comprenant les étapes consistant à :
communiquer entre une station mobile (MS, MS1) et un premier noeud (AP, AP-O) pour accéder audit système de communication cellulaire ;
communiquer entre ladite station mobile (MS, MS1) et un deuxième noeud (AP-U, MS2, Relais) pour accéder audit système de communication cellulaire ;
ladite étape de communication entre une station mobile (MS, MS1) et un premier noeud (AP, AP-O) étant maintenue simultanément à ladite étape de communication entre ladite station mobile (MS, MS1) et un deuxième noeud (APU, MS2, Relais) ;
de sorte que les informations allant vers le, et venant du, premier noeud (AP, AP-O) et allant vers le, et venant du, deuxième noeud (AP-U, MS2, Relais), ne sont pas identiques,
**caractérisé en ce que**
ladite étape de communication entre une station mobile (MS, MS1) et un premier noeud (AP, AP-O) par l'intermédiaire d'une première liaison sans fil est uniquement destinée à des informations de commande.

11. Procédé selon la revendication 10, **caractérisé en ce que** ledit deuxième noeud est un noeud relais (Relais), ledit procédé comprenant les étapes supplémentaires consistant à retransmettre des informations provenant de ladite station mobile (MS, MS1), reçues par ledit deuxième noeud (Relais), audit premier noeud (AP, AP-O) et à retransmettre des informations en provenance dudit premier noeud (AP, AP-O) reçues par ledit deuxième noeud (Relais), à ladite station mobile (MS, MS1).

12. Procédé selon la revendication 10, **caractérisé en ce que** ledit deuxième noeud est une autre station mobile (MS2), ladite étape de communication entre ladite station mobile (MS, MS1) et un deuxième noeud (MS2) comprenant l'étape consistant à effectuer une communication de Station Mobile à Station Mobile.

13. Procédé selon l'une quelconque des revendications 10 à 12, **caractérisé en ce que** ladite étape de communication entre ladite station mobile (MS, MS1) et un deuxième noeud (AP-U, MS2, Relais) comprend uniquement la communication d'informations depuis la station mobile (MS, MS1).

14. Procédé selon l'une quelconque des revendications 10 à 12, **caractérisé en ce que** ladite étape de communication entre ladite station mobile (MS, MS1) et un deuxième noeud (AP-U, MS2, Relais) comprend uniquement la communication d'informations vers la station mobile (MS, MS1).

15. Procédé selon l'une quelconque des revendications 10 à 14, **caractérisé en ce que** ladite étape de communication entre une station mobile (MS, MS1) et un premier noeud (AP, AP-O), et ladite étape de communication entre ladite station mobile (MS, MS1) et un deuxième noeud (AP-U, MS2, Relais) utilisent des technologies d'interface radio différentes pour l'émission.

16. Procédé selon l'une quelconque des revendications 10 à 14, **caractérisé en ce que** ladite étape de communication entre une station mobile (MS, MS1) et un premier noeud (AP, AP-O) et ladite étape de communication entre ladite station mobile (MS, MS1) et un deuxième noeud (AP-U, MS2, Relais) utilisent une même technologie d'interface radio pour l'émission.

17. Procédé selon l'une quelconque des revendications 10 à 16, **caractérisé par** l'étape supplémentaire consistant à :
multiplexer dans le temps les communications avec le premier noeud (AP, AP-O) et le deuxième noeud (AP-U, MS2, Relais).

18. Procédé selon l'une quelconque des revendications 10 à 16, **caractérisé par** l'étape supplémentaire consistant à :
multiplexer en fréquence les communications avec le premier noeud (AP, AP-O) et le deuxième noeud (AP-U, MS2, Relais).

19. Station mobile (MS, MS1), comprenant :
un moyen pour communiquer avec un premier noeud (AP, AP-O) pour accéder à un système de communication cellulaire ;
un moyen pour communiquer avec un deuxième noeud (AP-U, MS2, Relais) pour accéder audit système de communication cellulaire ;
ladite station mobile (MS, MS1) étant conçue pour maintenir une communication simultanée dudit moyen de communication avec un premier noeud (AP, AP-O) et dudit moyen de communication avec un deuxième noeud (AP-U, MS2, Relais) ;
les informations allant vers le, et venant du, premier noeud (AP, AP-O) et allant vers le, et venant du, deuxième noeud (AP-U, MS2, Relais) n'étant pas identiques,
**caractérisé en ce que**
une première liaison sans fil entre ladite station mobile (MS, MS1) et ledit premier noeud (AP, AP-O) est conçue uniquement pour des informations de commande.

20. Station mobile selon la revendication 19,
**caractérisée en ce que** ledit moyen de communication avec ledit deuxième noeud (AP-U, MS2, Relais) est conçu uniquement pour la communication d'informations depuis ladite station mobile (MS, MS1).

21. Station mobile selon la revendication 19,
**caractérisée en ce que** ledit moyen destiné à communiquer avec ledit deuxième noeud (APU, MS2, Relais) est conçu uniquement pour la communication d'informations vers ladite station mobile (MS, MS1).

22. Station mobile selon l'une quelconque des revendications 19 à 21, **caractérisée en ce que** ledit moyen de communication avec un premier noeud (AP, AP-O) et ledit moyen de communication avec un deuxième noeud (AP-U, MS2, Relais) sont conçus pour utiliser des technologies d'interface radio différentes pour l'émission.

23. Station mobile selon l'une quelconque des revendications 19 à 21, **caractérisée en ce que** ledit moyen de communication avec un premier noeud (AP, AP-O) et **en ce que** ledit moyen de communication avec un deuxième noeud (AP-U, MS2, Relais) sont conçus pour utiliser une même technologie d'interface radio pour l'émission.

24. Station mobile selon l'une quelconque des revendications 19 à 23, **caractérisée par** un multiplexeur temporel conçu pour fonctionner sur ledit moyen de communication avec un premier noeud (AP, AP-O) et sur ledit moyen de communication avec un deuxième noeud (AP-U, MS2, Relais).

25. Station mobile selon l'une quelconque des revendications 19 à 23, **caractérisée par** un multiplexeur en fréquence conçu pour fonctionner sur ledit moyen de communication avec un premier noeud (AP, AP-O) et sur ledit moyen de communication avec un deuxième noeud (AP-U, MS2, Relais).

26. Point d'accès (AP, AP-O) d'un système de communications cellulaires, comprenant :
un moyen pour communiquer avec une station mobile (MS, MS1) qui est conçue pour maintenir une communication simultanée avec un deuxième noeud (AP-U, MS2, Relais) pour accéder audit système de communication cellulaire ;
les informations allant vers ledit, et venant dudit, point d'accès (AP, AP-O) et allant vers ledit, et venant dudit, deuxième noeud (AP-U, MS2, Relais) n'étant pas identiques,
**caractérisé en ce que**
une première liaison sans fil entre ladite station mobile (MS, MS1) et ledit point d'accès (AP, AP-O) est conçue uniquement pour des informations de commande.
